# EUROPÄISCHE PATENTSCHRIFT

(11) **EP 2 282 166 B1**
(45) Veröffentlichungstag und Bekanntmachung des Hinweises auf die Patenterteilung: **14.08.2013**
(21) Anmeldenummer: 10006366.8
(22) Anmeldetag: 18.06.2010
(51) Int. Cl.: G01B 21/20, G01N 21/88

(54) **Verfahren zur Darstellung der Oberfläche eines Objekts**
Method for representing the surface of an object
Procédé destiné à la représentation de la surface d'un objet

(30) Priorität: 20.07.2009 DE 102009033886
(43) Veröffentlichungstag der Anmeldung: 09.02.2011
(73) Patentinhaber: Steinbichler Optotechnik GmbH, 83115 Neubeuern (DE)
(72) Erfinder: Winterberg, Horst, 83075 Bad Feilnbach (DE); Prams, Matthias, 83101 Rohrdorf (DE); Steinbichler, Marcus, Dr., 83115 Neubeuern (DE)
(74) Vertreter: Zinnecker, Armin

(56) Entgegenhaltungen:
- EP-B1- 0 995 108
- CH-A5- 681 710
- US-A- 5 627 771
- US-A1- 2006 140 473
- US-B1- 6 674 891

## Beschreibung

Die Erfindung betrifft ein Verfahren zur Darstellung der Oberfläche eines Objekts.

Aus der EP 553 266 B1 ist ein Verfahren zum Bestimmen der 3D-Koordinaten der Oberfläche eines Objekts bekannt, bei dem die Oberfläche des Objekts von einem Scanner abgetastet wird. Von einem Auswertesystem werden die 3D-Koordinaten im Scanner-Bezugssystem bestimmt. Ferner ist ein Tracking-System vorhanden, das die Position und Richtung des Scanners bestimmen kann. Von dem Auswertesystem können aus den 3D-Koordinaten im Scanner-Bezugssystem und aus den Daten der Position und Richtung des Scanners im absoluten Bezugssystem die absoluten 3D-Koordinaten der Oberfläche des Objekts bestimmt werden. Diese Daten können aufgezeichnet und/oder dargestellt werden.

Die EP 995 108 B1 offenbart ein Verfahren zur automatischen Erkennung von Oberflächenfehlern an Rohkarosserien von Kraftfahrzeugen, bei dem eine Projektionsvorrichtung eine Gitterstruktur auf die Rohkarosserie abstrahlt. Das von der Oberfläche der Rohkarosserie reflektierte Licht wird von einer optischen Meßvorrichtung aufgenommen und als Meßsignal einer Rechneranlage zugeführt. In der Rechneranlage können Oberflächenfehler erkannt werden, die durch eine Markiervorrichtung markiert werden können.

Verfahren zur Darstellung der Oberfläche eines Objekts werden in der Bauteilprüfung eingesetzt, insbesondere in der Kraftfahrzeugindustrie, aber auch in anderen Industriezweigen. Dabei können die 3D-Istdaten der Oberfläche des Objekts von einem 3D-Meßsystem bestimmt werden. Diese 3D-Istdaten, die beispielsweise in der Form einer Punktwolke vorliegen können, können dargestellt werden, insbesondere auf dem Bildschirm eines Computers oder PCs. Die auf diese Weise dargestellte Oberfläche des Objekts kann von einer Person betrachtet und beurteilt werden.

Die ästhetische, fehlerfreie Ausführung der sichtbaren Oberfläche eines Produkts ist ein entscheidendes Qualitätsmerkmal. Sie läßt Rückschlüsse auf die Güte und Wertigkeit des Produkts zu. Insbesondere in der Automobilindustrie, aber auch in anderen Branchen, wird deshalb einer hochwertigen Oberfläche seitens des Qualitätsmanagements ein hoher Stellenwert zugeschrieben.

Viele Oberflächenfehler werden allerdings erst sichtbar, wenn die Oberfläche glänzt und sich die Umgebung in ihr spiegelt. Der Glanz einer Oberfläche wird meist durch eine Oberflächenveredelung herbeigeführt, beispielsweise durch Lackierung, Eloxierung, Verchromung oder ähnliche Verfahren. Dieser Prozeßschritt steht in der Wertschöpfungskette jedoch sehr weit hinten, so daß die Beseitigung von Fehlern, die erst hier erkannt werden, oftmals gar nicht mehr möglich oder nur mit hohem Aufwand erreichbar ist, was mit entsprechend hohen Kosten verbunden ist.

Es ist daher aus Gründen der Wirtschaftlichkeit wünschenswert, Oberflächenfehler in der Wertschöpfungskette eines Produkts möglichst früh erkennen zu können. Auf matten Oberflächen sind Oberflächenfehler jedoch nur schwer zu erkennen und zu beurteilen.

Bei einem Karosserieteil eines Kraftfahrzeugs wird beispielsweise in einer ersten Prozeßstufe, die im Preßwerk stattfindet, ein Bauteil mit einer matten Oberfläche erzeugt. In einer zweiten Prozeßstufe wird ein Rohbau erzeugt, dessen Oberfläche ebenfalls noch matt ist. Erst in einer dritten Prozeßstufe wird das Bauteil lackiert, was zu einer glänzenden Oberfläche führt. Erst jetzt können Oberflächenfehler hinreichend erkannt und beurteilt werden.

Bisher wird mit Hilfe eines aufwendigen Qualitätsmanagements versucht, bereits in den frühen Prozeßstufen die später im fertigen Produkt sichtbaren Oberflächenfehler vorab zu bewerten. Hierfür werden diverse Hilfsmittel eingesetzt, beispielsweise Abziehsteine, Glanzöle, spezielle Lichtquellen und ähnliches. Einerseits sind jedoch alle diese Verfahren zeitaufwendig, und sie erfordern eine sehr große Erfahrung des Anwenders. Andererseits lassen diese Verfahren auch noch einen großen Spielraum hinsichtlich der sehr subjektiven Bewertung der Fehler.

Eine weitere Möglichkeit besteht darin, Probeteile durch die gesamte Prozeßkette bis zur Lackierung zu schicken, um das Erscheinungsbild auf dem fertigen Produkt tatsächlich beurteilen zu können. Dieser Prozeß dauert jedoch sehr lange und ist sehr teuer.

Aus der US 6 674 891 B1 ist ein Verfahren nach dem Oberbegriff des Anspruchs 1 bekannt.

Die US 2006/140473 A1, CH 681 710 A5 und US 5 627 771 A zeigen ähnliche Verfahren.

Hiervon ausgehend besteht die Aufgabe der Erfindung darin, ein verbessertes Vierfahren zur-Darstellung der Oberfläche eines Objekts vorzuschlagen.

Erfindungsgemäß wird diese Aufgabe durch die Merkmale des Anspruchs 1 gelöst. Bei dem Verfahren zur Darstellung der Oberfläche eines Objekts werden die 3D-Istdaten der Oberfläche des Objekts bestimmt. Die 3D-Solldaten der Oberfläche des Objekts werden auf der Grundlage der 3D-Istdaten der-Oberfläche des Objekts modifiziert. Die 3D-Solldaten der Oberfläche des Objekts und die modifizierten 3D-Solldaten der Oberfläche des Objekts werden als 3D-Darstellungsdaten verwendet.

Erfindungsgemäß werden die 3D-Solidaten der Oberfläche des Objekts in einem oder mehreren bestimmten Bereichen des Objekts modifiziert und als 3D-Darstellungsdaten verwendet. In den übrigen Bereichen des Objekts können die nicht modifizierten 30-Solidaten der Oberfläche des Objekts als 3D-Darstellungsdaten verwendet werden.

Die 3D-Istdaten der Oberfläche des Objekts können auf der Grundlage eines geeigneten Verfahrens und/oder einer geeigneten Vorrichtung bestimmt werden. Geeignet sind optische 3D-Meßgeräte, insbesondere Laser-Meßgeräte oder Weißlichtprojektionssysteme. Es können allerdings auch taktil arbeitende Meßgeräte verwendet werden. Die Bestimmung der 3D-Istdaten der Oberfläche des Objekts kann auch als 3D-Digitalisierung oder als Vermessung des Objekts bezeichnet werden.

Die 3D-Solldaten des Objekts können in einem Auswertesystem, beispielsweise in einem Computer oder PC, gespeichert sein. Sie können per Software und/oder durch eine Abtastung eines realen Objekts oder auf andere Weise generiert worden sein.

Die Darstellung der Oberfläche des Objekts kann durch ein Auswertesystem erfolgen, insbesondere durch einen Computer oder einen PC. Dabei erfolgt die Darstellung auf der Grundlage der 3D-Darstellungsdaten. Die 3D-Darstellungsdaten können auf dem Bildschirm des Computers oder PCs ausgegeben und von einer Person betrachtet und beurteilt werden. Sie können allerdings auch auf andere Weise dargestellt und sichtbar gemacht werden.

Erfindungsgemäß werden der oder die bestimmten Bereiche durch eine Überprüfung der 3D-Istdaten auf Oberflächenfehler bestimmt werden. Diese Überprüfung kann selbsttätig durchgeführt werden, insbesondere auf der Grundlage eines Auswertealgorithmus, der per Software realisiert werden kann. Zur Bestimmung der Oberflächenfehler können die 3D-Istdaten in der Weise überprüft werden, daß ein virtueller Abziehstein über die die Oberfläche des Objekts repräsentierenden 3D-Istdaten gezogen wird. Auf diese Weise können lokale Oberflächenfehler entdeckt werden. Im Bereich dieser lokalen Oberflächenfehler können aus den 3D-Istdaten die lokalen Krümmungen bestimmt und bewertet werden. Eine andere Möglichkeit zur Bestimmung der Oberflächenfehler besteht darin, ein sogenanntes Gutteil zu vermessen. Die auf diese Weise bestimmten 3D-Istdaten der Oberfläche dieses Gutteils werden als Referenz-3D-Istdaten verwendet und gegebenenfalls abgespeichert. Die 3D-Istdaten der anschließend gemessenen Objekte werden mit den Referenz-3D-Istdaten verglichen. Aus diesem Vergleich können Oberflächenfehler bestimmt werden.

In den übrigen Bereichen des Objekts können die 3D-Solldaten als 3D-Darstellungsdaten verwendet werden. Der gesamte Bereich des Objekts besteht dann aus Bereichen, in denen die 3D-Solldaten als 3D-Darstellungsdaten verwendet und dargestellt werden, und Bereichen, in denen die modifizierten 3D-Solldaten als 3D-Darstellungsdaten verwendet und dargestellt werden.

Vorteilhafte Weiterbildungen sind in den Unteransprüchen beschrieben.

Die 3D-Solldaten der Oberfläche des Objekts können in einem bestimmten Bereich des Objekts oder in mehreren bestimmten Bereichen des Objekts als 3D-Darstellungsdaten verwendet werden.

Dabei kann es sich um einen oder mehrere vorbestimmte Bereiche handeln, der oder die vorab festgelegt werden. Der oder die vorbestimmten Bereiche können von einer Person (Beobachter, Auswerteperson) vorab festgelegt werden. Stattdessen oder zusätzlich können der oder die Bereiche interaktiv bestimmt werden.

Die 3D-Solldaten können durch eine Verfeinerung der 3D-Solldaten und/oder durch eine Änderung der Normalenvektoren der 3D-Solldaten modifiziert werden. Die auf diese Weise modifizierten 3D-Solldaten können als 3D-DarsteNungsdaten verwendet werden.

Vorteilhaft ist es, wenn die 3D-Solldaten und/oder die 3D-istdaten und/oder die modifizierten 3D-Solldaten als CAD-Daten vorliegen. Dies kann die Verarbeitung der Daten und/oder deren Darstellung erleichtern.

Es ist möglich, die 3D-Darstellungsdaten unmittelbar für die Darstellung der Oberfläche des Objekts zu verwenden. Die 3D-Oarstellungsdaten können allerdings auch vor der Darstellung bearbeitet werden.

Vorteilhaft ist es, wenn die Darstellung des Objekts aus einem wählbaren Betrachterstandpunkt erfolgt. Insbesondere können die Entfernung des Betrachters und/oder dessen Blickwinkel gewählt werden. Hierdurch kann erreicht werden, daß Fehler auf der Oberfläche des Objekts besser erkannt und beurteilt werden können.

Vorzugsweise erfolgt die Darstellung des Objekts mit einer wählbaren Oberflächencharakteristik. Insbesondere können das Material der Oberfläche (Lack, Eloxierung, Verchromung etc.), deren Farbe und/oder deren Glanzgrad gewählt werden.

Nach einer weiteren vorteilhaften Weiterbildung erfolgt die Darstellung des Objekts mit einer wählbaren Beleuchtungscharakteristik. Vorteilhaft ist es, wenn die Anzahl der Beleuchtungsquellen, deren Art, deren Position, deren Stärke, deren Richtung und/oder deren Strahlcharakteristik wählbar sind.

Vorzugsweise erfolgt die Darstellung des Objekts mit einer wählbaren Umgebungscharakteristik. Wählbar sind insbesondere die umgebenden Wände, deren Farben und/oder deren Reflexionsgrad.

Nach einer weiteren vorteilhaften Weiterbildung kann der Darstellung des Objekts eine Fehlerdarstellung überlagert werden. Insbesondere kann die Darstellung des oder der Fehler überhöht werden. Es ist möglich, Fehlerdaten zu bestimmen und darzustellen, wobei die Darstellung vorzugsweise überlagernd erfolgt.

Ein Ausführungsbeispiel der Erfindung wird nachstehend anhand der beigefügten Zeichnung im einzelnen erläutert. In der Zeichnung zeigt
- Fig. 1: einen Ausschnitt eines CAD-Modells eines Objekts in einer Ansicht von oben,
- Fig. 2: einen Schnitt längs der Linie A-A in Fig. 1,
- Fig. 3: das CAD-Modell der Fig. 1 als Dreiecksnetz und
- Fig. 4: das Dreiecksnetz gemäß Fig. 3 mit Veränderungen in einem be- stimmten Bereich.

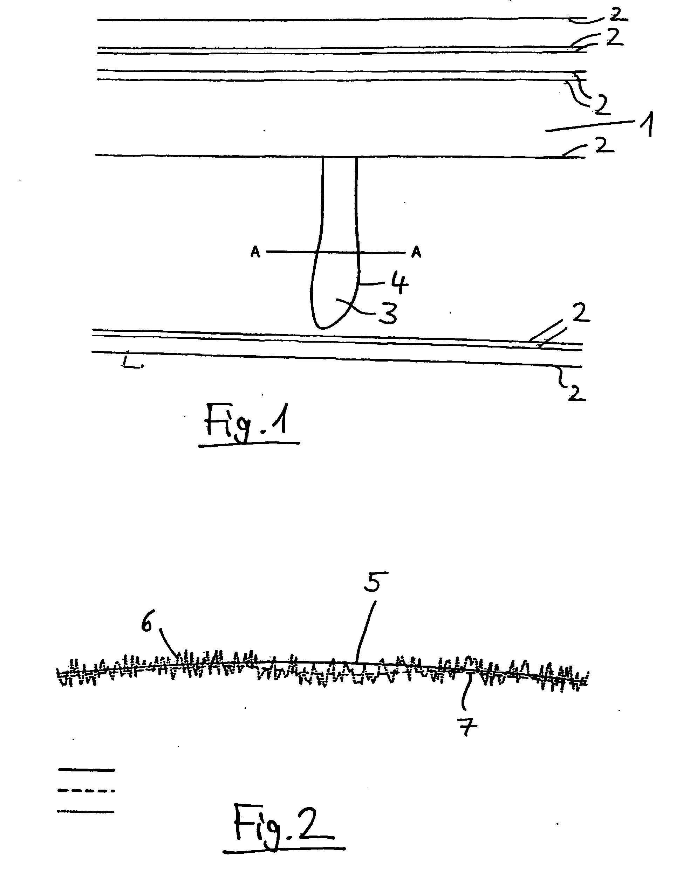

Fig. 1 zeigt einen Ausschnitt eines CAD-Modells eines Objekts 1. Die Linien 2 sind die Berandungen ("edges") der Konstruktionsflächen ("faces") des CAD-Modells. Das CAD-Modell beinhaltet die 3D-Solldaten des Objekts 1.

An einer Stelle des Objekts 1 befindet sich ein Oberflächenfehler 3, dessen Umriß mit 4 bezeichnet ist. Der Umriß 4 kann vorab festgelegt sein. Es ist allerdings auch möglich, daß sich der Umriß 4 aus einer Überprüfung der 3D-Istdaten auf Oberflächenfehler ergibt. Diese Überprüfung kann von einer Person durchgeführt werden. Es ist allerdings auch möglich, die Überprüfung auf der Grundlage eines Auswertealgorithmus per Software durchzuführen.

Fig. 2 zeigt einen Schnitt längs der Linie A-A in Fig. 1. Der Verlauf der 3D-Solldaten ist durchgezogen gezeichnet und mit 5 bezeichnet. Die gemessenen 3D-Istdaten 6, die gepunktet gezeichnet sind, weichen hiervon ab. Aus den ursprünglich gemessenen 3D-Istdaten 6 werden durch eine Mittelwertbildung die 3D-Istdaten 7, die gestrichelt gezeichnet sind, bestimmt. Die 3D-Istdaten 7 sind gegenüber den ursprünglich gemessenen 3D-Istdaten 6 geglättet.

Die 3D-Solldaten 5 werden im Bereich des Oberflächenfehlers 3 auf der Grundlage der 3D-Istdaten 7 modifiziert. Die derart modifizierten 3D-Solldaten 5 werden im Bereich des Oberflächenfehlers 3 als 3D-Darstellungsdaten verwendet. In den äußeren Bereichen der Fig. 2 weichen die 3D-Istdaten 7 nur geringfügig von den 3D-Solldaten 5 ab. In diesen Bereichen werden die 3D-Solldaten als 3D-Darstellungsdaten verwendet. Im mittleren Bereich der Fig. 2, der innerhalb des Umrisses 4 des Oberflächenfehlers 3 liegt (vgl. Fig. 1), werden die modifizierten 3D-Solldaten 5 als 3D-Darstellungsdaten verwendet. In dem gesamten Bereich des Objekts 1 werden also entweder die 3D-Solldaten 5 oder die modifizierten 3D-Solldaten als 3D-Darstellungsdaten verwendet und bildlich dargestellt.

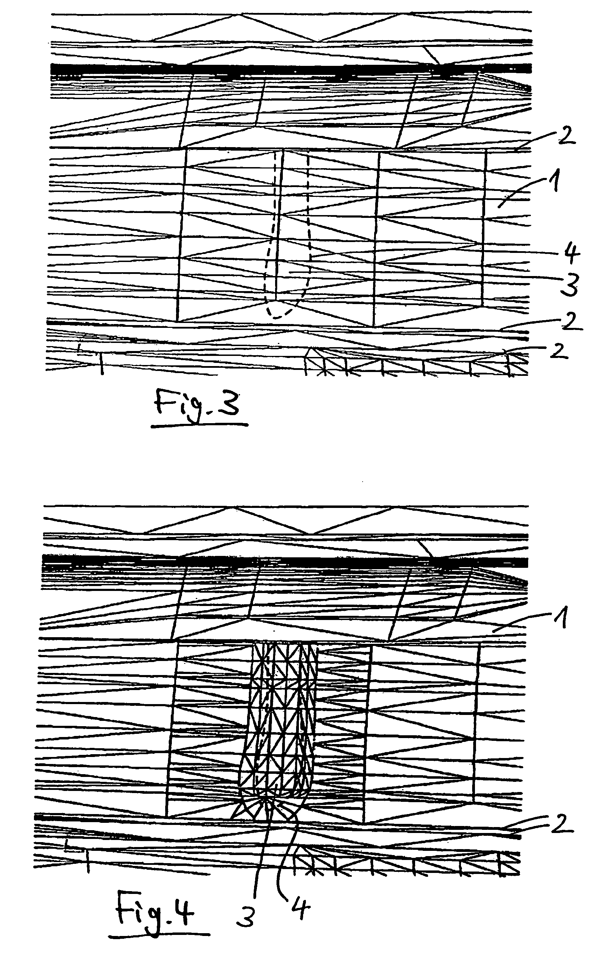

Die 3D-Solldaten 5 und die modifizierten 3D-Solldaten, die als 3D-Darstellungsdaten verwendet werden, liegen jeweils als CAD-Daten vor. Dies ist aus Fig. 3 und 4 ersichtlich. Fig. 3 zeigt das Dreiecksnetz des CAD-Modells der 3D-Solldaten. Die Umrechnung des CAD-Modells in das Dreiecksnetz kann mit einstellbarer Genauigkeit (Sehnenfehler) erfolgen. Der Umriß 4 des Oberflächenfehlers 3 ist in Fig. 3 und 4 gestrichelt dargestellt.

Im Bereich des Oberflächenfehlers 3 werden die 3D-Solldaten auf der Grundlage der 3D-Istdaten modifiziert und als 3D-Darstellungsdaten verwendet. Die 3D-Solldaten werden in diesem Bereich verfeinert, wie aus Fig. 4 ersichtlich. Ferner werden die modifizierten 3D-Solldaten, die im Bereich des Oberflächenfehlers 3 als 3D-Darstellungsdaten verwendet werden, im Übergangsbereich zu den 3D-Solldaten, die im Bereich außerhalb des Oberflächenfehlers 3 als 3D-Darstellungsdaten verwendet werden, an diese 3D-Solldaten angepaßt. Auf diese Weise soll ein möglichst glatter Übergang von den modifizierten 3D-Solldaten zu den ursprünglichen 3D-Solldaten erreicht werden. Das Dreiecksnetz des CAD-Modells wird, entsprechend der Lage, Ausdehnung und 3D-Kontur 4 des Oberflächenfehlers 3, lokal begrenzt verändert, wie in Fig. 4 gezeigt. Die Veränderung erfolgt in der Weise, daß das veränderte Dreiecksnetz im Bereich des Oberflächenfehlers 3 den 3D-Konturverlauf des Oberflächenfehlers 3 moduliert.

Durch die Erfindung wird ein System geschaffen, das eine Simulation der visuellen Auswirkung von Oberflächenfehlern vor der physischen Oberflächenveredelung ermöglicht. Durch eine Kombination der gemessenen 3D-Istdaten, die die Oberflächenfehler-Kontur beinhalten, und der 3D-Solldaten, die aus dem CAD-Modell stammen, kann das spätere Erscheinungsbild des realen Bauteils nach der Oberflächenveredelung (Lackierung, Eloxierung, Verchromung etc.) vorweggenommen werden. Dabei werden die gemessenen 3D-Istdaten der Oberfläche genutzt, die mit Hilfe von 3D-Meßsystemen, insbesondere optischen 3D-Meßsystemen aufgenommen werden können. Die Position und Charakterisierung der auf der Oberfläche detektierten Oberflächenfehler können genutzt werden.

Die Oberfläche wird auf der Basis eines 3D-Computergraphikmodells mit simulierter, veredelter Oberfläche visualisiert. Der Standpunkt des Betrachters kann beliebig verändert werden, beispielsweise in der Weise, wie ein Betrachter um die Oberfläche herumläuft. Farbe und Glanzgrad des Lacks der Oberfläche, die Charakteristik der Beleuchtung und/oder die Umgebung, die sich in der Oberfläche spiegelt, können per Software frei wählbar sein. Der Anwender kann auf diese Weise beliebige Umgebungsbedingungen hinsichtlich der Sichtbarkeit der Oberflächenfehler testen, wie wenn sich das reale Objekt in der Umgebung befinden würde. Beispielsweise kann als Umgebung ein Showroom beim Händler, eine Umgebung in einer Stadt, eine Umgebung in einer Landschaft oder ein Qualitätsraum mit speziellem Licht ("Grünraum") gewählt werden. Eine überlagerte Darstellung mit Fehlerinformationen ist möglich. Als Fehlerinformationen können eine farbkodierte Relevanz, der Fehlertyp, die Fehlergröße und/oder die Fehlertiefe und ähnliches dargestellt werden. Es ist möglich, die Darstellung der Fehler zur besseren Sichtbarkeit zu überhöhen. Es ist ferner möglich, zwei Oberflächen direkt visuell zu vergleichen. Insbesondere kann ein Vergleich gegen ein Grenzmuster durchgeführt werden oder ein Vergleich unterschiedlicher Produktionsstände. Ferner ist es möglich, einen direkten visuellen Vergleich der Ist-Oberfläche zum CAD-Modell (Soll-Oberfläche) durchzuführen.

## Patentansprüche

1. Verfahren zur Darstellung der Oberfläche eines Objekts(1),
bei dem die 3D-Istdaten (7) der Oberfläche des Objekts (1) bestimmt werden,
bei dem die 3D-Solldaten (5) der Oberfläche des Objekts (1) auf der Grundlage der 3D-Istdaten der Oberfläche des Objekts (1) modifiziert werden,
bei dem die 3D-Solldaten (5) der Oberfläche des Objekts (1) und die modifizierten 3D-Solldaten der Oberfläche des Objekts (1) als 3D-Darstellungsdaten verwendet werden, und bei dem die 3D-Solldaten (5) der Oberfläche des Objekts (1) in einem bestimmten Bereich oder mehreren bestimmten Bereichen des Objekts (1) modifiziert werden,
**dadurch gekennzeichnet, daß**
- der bestimmte Bereich oder die bestimmten Bereiche durch eine Überprüfung der 3D-Istdaten auf Oberflächenfehler bestimmt werden,
- die modifizierten 3D-Solldaten (5) der Oberfläche des Objekts (1) im Bereich der Oberflächenfehler als 3D-Darstellungsdaten verwendet werden, und
- in den übrigen Bereichen die 3D-Solldaten (5) der Oberfläche des Objekts (1) als 3D-Darstellungsdaten verwendet werden.

2. Verfahren nach Anspruch 1, **dadurch gekennzeichnet, daß** der oder die bestimmten Bereiche vorbestimmt sind und/oder interaktiv bestimmt werden.

3. Verfahren nach einem der vorhergehenden Ansprüche, **dadurch gekennzeichnet, daß** die 3D-Solidaten durch eine Verfeinerung der 3D-Solldaten und/oder durch eine Änderung der Normalenvektoren der 3D-Solldaten modifiziert werden.

4. Verfahren nach einem der vorhergehenden Ansprüche, **dadurch gekennzeichnet, daß** die 3D-Solldaten (5) und/oder die 3D-Istdaten (7) und/oder die modifizierten 3D-Solldaten als CAD-Daten vorliegen.

5. Verfahren nach einem der vorhergehenden Ansprüche, **dadurch gekennzeichnet, daß** die 3D-Darstellungsdaten vor der Darstellung bearbeitet werden.

6. Verfahren nach einem der vorhergehenden Ansprüche, **dadurch gekennzeichnet, daß** die Darstellung des Objekts (1) aus einem wählbaren Betrachterstandpunkt erfolgt.

7. Verfahren nach einem der vorhergehenden Ansprüche, **dadurch gekennzeichnet, daß** die Darstellung des Objekts (1) mit einer wählbaren Oberflächencharakteristik erfolgt.

8. Verfahren nach einem der vorhergehenden Ansprüche, **dadurch gekennzeichnet, daß** die Darstellung des Objekts (1) mit einer wählbaren Beleuchtungscharakteristik erfolgt.

9. Verfahren nach einem der vorhergehenden Ansprüche, **dadurch gekennzeichnet, daß** die Darstellung des Objekts (1) mit einer wählbaren Umgebungscharakteristik erfolgt.

10. Verfahren nach einem der vorhergehenden Ansprüche, **dadurch gekennzeichnet, daß** der Darstellung des Objekts (1) eine Fehlerdarstellung überlagert wird.

## Claims

1. Method for representing the surface of an object (1), wherein the actual 3D data (7) of the surface of the object (1) is determined,
wherein the target 3D data (5) of the surface of the object (1) is modified based on the actual 3D data of the surface of the object (1),
wherein the target 3D data (5) of the surface of the object (1) and the modified target 3D data of the surface of the object (1) are used as 3D representation data, and
wherein the target 3D data (5) of the surface of the object (1) is modified in a specific region or several specific regions of the object (1),
**characterised in that**,
- the specific region or the specific regions are determined by monitoring the actual 3D data for surface defects,
- the modified target 3D data (5) of the surface of the object (1) is used as 3D representation data in the region of the surface defect, and
- the target 3D data (5) of the surface of the object (1) is used as 3D representation data in the remaining regions.

2. Method according to claim 1, **characterised in that** the specific region(s) is/are predetermined and/or interactively determined.

3. Method according to one of the preceding claims, **characterised in that** the target 3D data is modified by refining the target 3D data and/or by amending the normal vectors of the target 3D data.

4. Method according to one of the preceding claims, **characterised in that** the target 3D data (5) and/or the actual 3D data (7) and/or the modified target 3D data are present as CAD data.

5. Method according to one of the preceding claims, **characterised in that** the 3D representation data is processed before the representation.

6. Method according to one of the preceding claims, **characterised in that** the representation of the object (1) takes place from a selectable viewer position.

7. Method according to one of the preceding claims, **characterised in that** the representation of the object (1) takes place with selectable surface characteristics.

8. Method according to one of the preceding claims, **characterised in that** the representation of the object (1) takes place with selectable illumination characteristics.

9. Method according to one of the preceding claims, **characterised in that** the representation of the object (1) takes place with selectable environmental characteristics.

10. Method according to one of the preceding claims, **characterised in that** a defective representation is superimposed by the representation of the object (1).

## Revendications

1. Procédé destiné à la représentation de la surface d'un objet (1),
dans lequel les données effectives 3D (7) de la surface de l'objet (1) sont déterminées,
dans lequel les données de consigne 3D (5) de la surface de l'objet (1) sont modifiées sur la base des données effectives 3D de la surface de l'objet (1), dans lequel les données de consigne 3D (5) de la surface de l'objet (1) et les données de consigne 3D modifiées de la surface de l'objet (1) sont utilisées en tant que données de représentation 3D, et
dans lequel les données de consigne 3D (5) de la surface de l'objet (1) sont modifiées dans une zone définie ou dans plusieurs zones définies de l'objet (1),
**caractérisé en ce que**
- la zone définie ou les zones définies sont définies par un contrôle des données effectives 3D destiné à rechercher des défauts de surface,
- les données de consigne 3D (5) modifiées de la surface de l'objet (1) sont utilisées dans la zone des défauts de surface en tant que données de représentation 3D, et
- dans les zones restantes, les données de consigne 3D (5) de la surface de l'objet (1) sont utilisées en tant que données de représentation 3D.

2. Procédé selon la revendication 1, **caractérisé en ce que** la ou les zones définies sont prédéterminées et/ou sont définies de façon interactive.

3. Procédé selon une des revendications précédentes, **caractérisé en ce que** les données de consigne 3D sont modifiées par un affinement des données de consigne 3D et/ou par une variation des vecteurs normaux des données de consigne 3D.

4. Procédé selon une des revendications précédentes, **caractérisé en ce que** les données de consigne 3D (5) et/ou les données effectives 3D (7) et/ou les données de consigne 3D modifiées se présentent sous forme de données CAD.

5. Procédé selon une des revendications précédentes, **caractérisé en ce que** les données de représentation 3D sont traitées avant la représentation.

6. Procédé selon une des revendications précédentes, **caractérisé en ce que** la représentation de l'objet (1) s'effectue à partir d'un point de vue d'observateur pouvant être choisi.

7. Procédé selon une des revendications précédentes, **caractérisé en ce que** la représentation de l'objet (1) s'effectue avec une caractéristique de surface pouvant être choisie.

8. Procédé selon une des revendications précédentes, **caractérisé en ce que** la représentation de l'objet (1) s'effectue avec une caractéristique d'éclairage pouvant être choisie.

9. Procédé selon une des revendications précédentes, **caractérisé en ce que** la représentation de l'objet (1) s'effectue avec une caractéristique d'environnement pouvant être choisie.

10. Procédé selon une des revendications précédentes, **caractérisé en ce qu'**une représentation de défaut se superpose à la représentation de l'objet (1).
